# EUROPÄISCHE PATENTANMELDUNG

(11) **EP 3 078 881 A1**
(43) Veröffentlichungstag der Anmeldung: **12.10.2016**
(21) Anmeldenummer: 16155139.5
(22) Anmeldetag: 11.02.2016
(51) Int. Cl.: F16H 47/04

(54) **HYDROMECHANISCHES GETRIEBE**

(30) Priorität: 09.04.2015 DE 102015105358
(71) Anmelder: CLAAS Industrietechnik GmbH, 33106 Paderborn (DE)
(72) Erfinder: Gohde, Thomas, 33181 Bad Wünnenberg (DE)
(74) Vertreter: Budach, Steffen

(57) **Zusammenfassung**

Ein hydromechanisches Getriebe (3) mit einem leistungsverzweigten mechanischen Getriebe (8) und einem mit dem mechanischen Getriebe (8) zusammenwirkenden stufenlos verstellbaren hydrostatischen Getriebe (9), bei dem zur Übertragung von Antriebsleistung einer als Pumpe wirkenden hydrostatischen Einheit (24, 25) mit einer als Motor wirkenden hydrostatischen Einheit (25, 24) hydraulisch verbunden ist, und wobei das hydromechanische Getriebe (3) einen ersten Betriebsmodus aufweist, in welchem durch eine Kupplungsanordnung (28, 31) zwischen einem ersten Vorwärtsfahrbereich und einem ersten Rückwärtsfahrbereich umschaltbar ist, wobei erfindungsgemäß das hydromechanische Getriebe (3) einen zweiten Betriebsmodus aufweist, in welchem das hydromechanische Getriebe (3) schaltfrei, vollhydrostatisch in einem zweiten Vorwärtsfahrbereich und einem zweiten Rückwärtsfahrbereich betreibbar ist.

## Beschreibung

Die vorliegende Erfindung betrifft ein stufenloses hydromechanisches Getriebe gemäß dem Oberbegriff des Anspruchs 1, insbesondere zur Verwendung im Antriebsstrang einer landwirtschaftlichen Arbeitsmaschine.

Hydromechanische Getriebe mit einer stufenlos veränderbaren Übersetzung (Englisch: Continuously Variable Transmission oder abgekürzt CVT) sind allgemein aus dem Stand der Technik bekannt und werden zunehmend in landwirtschaftlichen Arbeitsmaschinen, beispielsweise Traktoren oder Teleskopladern, eingesetzt. Ein solches hydromechanisches Getriebe weist üblicherweise neben einem leistungsverzweigten mechanischen Getriebe ein mit diesem zusammenwirkendes hydrostatisches Getriebe auf. Das hydrostatische Getriebe weist dabei herkömmlicherweise zwei hydrostatische Einheiten auf, welche in einem Fluidkreislauf hydraulisch miteinander verbunden sind und von denen jeweils eine als Pumpe und die andere als Motor arbeitet.

Indem zumindest eine der Einheiten ein veränderbares hydraulisches Schluck- bzw. Fördervolumen aufweist, lässt sich das Drehzahlverhältnis zwischen den Wellen von Pumpe und Motor stufenlos verstellen. In Zusammenwirkung des hydrostatischen Getriebes mit einem leistungsverzweigten mechanischen Getriebe ergibt sich zusammen eine hydromechanische Getriebeanordnung, bei der sich ein Übersetzungsverhältnis zwischen Eingangswelle und Ausgangswelle, zumindest bereichsweise, stufenlos verändern lässt. Mit einer Veränderung des Übersetzungsverhältnisses ändert sich dabei auch die Aufteilung zwischen mechanisch und hydraulisch übertragener Antriebsleistung innerhalb des hydromechanischen Getriebes. Dadurch kann ein Nachteil eines rein hydrostatischen Getriebes, wie gegenüber einem mechanischen Getriebe erhöhten Reibungsverlust, zumindest teilweise reduziert werden, da es möglich ist, nur einen Teil der Antriebsleistung über das hydrostatische Getriebe zu übertragen, wodurch die Verluste geringer sind als bei einer rein hydrostatischen Übertragung. Der über das hydrostatische Getriebe übertragene Anteil der Antriebsleistung kann insbesondere dann gering sein, wenn ein extremes Übersetzungsverhältnis des hydrostatischen Getriebes eingestellt wird, wobei dessen Wirkungsgrad schlecht ist.

Im Vergleich zu einem hydrostatischen Getriebe weist das hydromechanische Getriebe jedoch eine geringere Spreizung auf. Um die Spreizung wieder zu vergrößern, wird beispielsweise in der DE 43 43 402 A1 ein hydromechanisches Getriebe mit mehreren Fahrbereichen vorgeschlagen. Dabei sind zwei Kupplungen vorgesehen, die beispielsweise die wahlweise Verbindung des hydrostatischen Getriebes mit zwei Ausgleichsanschlüssen des leistungsverzweigten mechanischen Getriebes oder mit einem Ausgleichsanschluss und einem Ausgangsanschluss des Ausgleichsgetriebes ermöglichen, um auf diese Weise zwei Vorwärtsfahrbereiche mit unterschiedlichen Übersetzungsbereichen zu realisieren.

Bei einem wir zuvor beschriebenen hydromechanischen Getriebe kann die Art der Leistungsübertragung, insbesondere die Aufteilung der Leistungsübertragung zwischen dem hydrostatischen und dem mechanischen Getriebe, in verschiedenen Betriebssituationen stark unterschiedlich sein und zu einer ungleichmäßigen Kraftübertragung führen. Dies kann zusammen mit erforderlichen Schaltvorgängen in dem hydromechanischen Getriebe in einer Betriebssituation, welche ein präzises und gleichmäßiges Fahrverhalten erfordern, beispielsweise beim Rangieren, Ankoppeln von Anbaugeräten oder Arbeiten mit einem Frontlader, von einem Bediener der landwirtschaftlichen Arbeitsmaschine als störend empfunden werden und eine erhöhte Konzentration des Bedieners erfordern.

Es ist daher eine Aufgabe der vorliegenden Erfindung, ein hydromechanisches Getriebe bereitzustellen, welches ein präziseres und gleichmäßigeres Fahrverhalten der landwirtschaftlichen Arbeitsmaschine ermöglicht.

Die Lösung der Aufgabe erfolgt erfindungsgemäß durch die kennzeichnenden Merkmale des Anspruches 1. Vorteilhafte Ausgestaltungen der Erfindung sind in den Unteransprüchen angegeben.

Ein hydromechanisches Getriebe mit einem leistungsverzweigten mechanischen Getriebe und einem mit dem mechanischen Getriebe zusammenwirkenden stufenlos verstellbaren hydrostatischen Getriebe, bei dem zur Übertragung von Antriebsleistung einer als Pumpe wirkenden hydrostatischen Einheit mit einer als Motor wirkenden hydrostatischen Einheit hydraulisch verbunden ist, und wobei das hydromechanische Getriebe einen ersten Betriebsmodus aufweist, in welchem durch eine Kupplungsanordnung zwischen einem ersten Vorwärtsfahrbereich und einem ersten Rückwärtsfahrbereich umschaltbar ist, wobei erfindungsgemäß das hydromechanische Getriebe einen zweiten Betriebsmodus aufweist, in welchem das hydromechanische Getriebe schaltfrei, vollhydrostatisch in einem zweiten Vorwärtsfahrbereich und einem zweiten Rückwärtsfahrbereich betreibbar ist.

Die Auslegung eines hydromechanischen Getriebes erfolgt üblicherweise gemäß den Fahranforderungen, welche bei dem Einsatz des hydromechanischen Getriebes an die landwirtschaftliche Arbeitsmaschine gestellt werden. Die Schaltung und Regelung des hydromechanischen Getriebes erfolgt dabei basierend auf einem Betriebsmodus, welcher ebenfalls auf die Fahranforderungen abgestimmt ist, entsprechend den Eingaben eines Bedieners der landwirtschaftlichen Arbeitsmaschine. Der erste oder zweite Betriebsmodus kann dabei von einem Bediener der landwirtschaftlichen Arbeitsmaschine, insbesondere unabhängig von einem Fahrzustand der landwirtschaftlichen Arbeitsmaschine, ausgewählt werden. Unter einer Schaltung des Betriebsmodus ist die dem jeweiligen Betriebsmodus entsprechende Schaltung der Kupplungsanordnungen des hydromechanischen Getriebes zu verstehen. Eine Aktivierung eines Betriebsmodus umfasst, zusammen mit oder nach einer Schaltung der Kupplungsanordnungen, die dem jeweiligen Betriebsmodus entsprechende Steuerung und Regelung der hydrostatischen Einheiten. Dadurch können die von dem Bediener vorgesehenen Fahrmanöver in dem entsprechenden Betriebsmodus durchgeführt werden.

So kann in einem ersten Betriebsmodus des hydromechanischen Getriebes, welcher beispielsweise für eine Feldarbeit der landwirtschaftlichen Arbeitsmaschine optimiert ist und durch einen Bediener der landwirtschaftlichen Maschine auswählbar ist, in einem ersten Vorwärtsfahrbereich mit zunehmender Geschwindigkeit der zunächst 100% betragende hydrostatische Leistungsanteil kontinuierlich abnehmen, wodurch die Reibungsverluste aufgrund des zunehmenden mechanischen Leistungsanteil reduziert werden können. In einem ersten Rückwärtsfahrbereich kann der hydrostatische Leistungsanteil mit zunehmender Geschwindigkeit hingegen zunehmen. Alternativ ist eine Auslegung des hydromechanischen Getriebes denkbar, bei der ein Wechsel des Fahrbereiches, beispielsweise von Vorwärts auf Rückwärts, mittels Schaltung einer Kupplungsanordnung in Stillstandsnähe, erfolgt, wobei in dem Vorwärtsfahrbereich der hydrostatische Leistungsanteil weiterhin mit zunehmender Geschwindigkeit absinkt, im Rückwärtsfahrbereich jedoch vollhydrostatisch gefahren werden kann.

In einem erfindungsgemäßen zusätzlichen, zweiten Betriebsmodus ist das hydrostatische Getriebe derart mit dem leistungsverzweigten mechanischen Getriebe verbunden, dass sowohl in dem zweiten Vorwärtsfahrbereich als auch in dem zweiten Rückwärtsfahrbereich die Übertragung der Antriebsleistung im Wesentlichen vollständig über das hydrostatische Getriebe erfolgt. Ein Wechsel zwischen den Fahrbereichen kann dabei schaltfrei, also ohne die Betätigung einer Kupplungsanordnung in dem hydromechanischen Getriebe, durch entsprechende Ansteuerung einer oder beider hydrostatischen Einheiten erfolgen. Der Wechsel zwischen den Fahrbereichen kann dabei mit oder ohne eine Umkehr der hydraulischen Flussrichtung zwischen den über einen hydraulischen Kreislauf verbundenen hydrostatischen Einheiten erfolgen. Durch die vollhydrostatische Leistungsübertragung und dadurch den vollhydrostatischen Antrieb einer Ausgangswelle des hydromechanischen Getriebes kann sowohl in dem Vorwärtsfahrbereich als auch in dem Rückwärtsfahrbereich eine Veränderung der Leistungsanteile vermiede und dadurch eine gleichmäßigere Kraftübertragung ermöglicht werden. Zudem kann durch den rein über die hydrostatischen Einheiten durchgeführte Wechsel zwischen den Fahrbereichen ein Kupplungs- und/oder Schaltvorgang bei einem Fahrbereichswechsel vermieden werden. Dadurch kann in beide Fahrtrichtungen, ohne zu schalten und mit gleichmäßigerer Kraftübertragung in rein vollhydrostatischer Weise gefahren werden, wodurch ein präziseres Fahren der landwirtschaftlichen Arbeitsmaschine, beispielsweise beim Rangieren, Arbeiten mit einem Frontlader oder Ankoppeln eines Anbaugerätes, ermöglicht werden kann.

Eine bevorzugte Ausgestaltung der Erfindung sieht vor, dass jeder hydrostatischen Einheit eine Kupplungsanordnung zur schaltbaren Verbindung mit dem mechanischen Getriebe zugeordnet ist und dass in dem zweiten Betriebsmodus die als Pumpe wirkende hydrostatische Einheit über eine, insbesondere die zweite, Kupplungsanordnung in Antriebsverbindung mit einem festen Übersetzungsverhältnis mit einer Eingangswelle des hydromechanischen Getriebes koppelbar ist. Die den jeweiligen hydrostatischen Einheiten zugeordneten Kupplungsanordnungen können jeweils eine oder mehrere Kupplungen, beispielsweise in Form einer Doppelkupplung, umfassen. Dadurch sind die hydrostatischen Einheiten wahlweise mit dem mechanischen Getriebe in Antriebsverbindung bringbar. Der ersten hydrostatischen Einheit, welche beispielsweise in dem zweiten Betriebsmodus als Pumpe arbeitet, kann eine zweite Kupplungsanordnung in Form einer Doppelkupplung zugeordnet sein. Dadurch ist die erste hydrostatische Einheit in dem ersten Betriebsmodus mit dem leistungsverzweigten mechanischen Getriebe koppelbar, um dessen Übersetzungsverhältnis zu variieren oder um durch Schalten der zweiten Kupplungsanordnung zwischen den Fahrbereichen umzuschalten, also die Drehrichtung der Ausgangswelle des hydromechanischen Getriebes umzukehren. In einer Schaltung und Regelung des hydromechanischen Getriebes entsprechend dem zweiten Betriebsmodus unterbleibt eine Betätigung der zweiten Kupplungsanordnung bei einem von dem Bediener der landwirtschaftlichen Arbeitsmaschine vorgesehenen Wechsels des Fahrbereiches und die hydrostatischen Einheiten werden entsprechend geregelt, um eine Umkehr der Drehrichtung der Ausgangswelle zu bewirken, wodurch eine gleichmäßige Kraftübertragung und ein präziseres Fahren der landwirtschaftlichen Arbeitsmaschine bewirkt werden kann. Zudem ist in dem zweiten Betriebsmodus die erste hydrostatische Einheit über die zweite Kupplungsanordnung mit einem festen Übersetzungsverhältnis in Antriebsverbindung mit der Eingangswelle des hydromechanischen Getriebes gekoppelt. Hierdurch kann bei gleichem Druckaufbau in der ersten hydrostatischen Einheit die Leistung des Antriebsmotors erhöht werden, wodurch beispielsweise bei einer mit der Eingangswelle gekoppelten Zapfwelle eine höhere Leistung zur Verfügung steht.

In einer bevorzugten Ausgestaltung der Erfindung sind die hydrostatischen Einheiten derart ausgebildet, dass das hydrostatische Getriebe mit umkehrbarer hydraulischer Flussrichtung betreibbar ist, wobei insbesondere in dem zweiten Betriebsmodus die Zuordnung der beiden hydrostatischen Einheiten als Pumpe und Motor unverändert ist. Hierbei kann die erste hydrostatische Einheit über die zweite Kupplungsanordnung in einem festen Übersetzungsverhältnis an die Eingangswelle gekoppelt und proportional zur Drehzahl des Antriebsmotors antreibbar sein. Dadurch kann eine Förderleistung und ein Förderdruck der ersten hydrostatischen Einheit unmittelbar über die Drehzahl der Eingangswelle und des Antriebsmotors gesteuert werden. Zum Wechsel zwischen den Fahrbereichen und somit einer Umkehr der Drehrichtung der Ausgangswelle des hydromechanischen Getriebes, kann beispielsweise die hydraulische Flussrichtung durch die als Pumpe wirkende, insbesondere die erste, hydrostatische Einheit umgekehrt werden, wodurch die als Motor wirkende, insbesondere zweite, hydrostatische Einheit kostengünstiger als nicht regelbare Einheit ausgebildet sein kann. Alternativ kann die als Pumpe wirkende hydrostatische Einheit die hydraulische Flussrichtung zwischen den beiden hydrostatischen Einheiten unverändert lassen, wobei eine Umkehr der Drehrichtung durch eine als Motor wirkende variable hydrostatische Einheit bewirkt werden kann.

In einer weiteren bevorzugten Ausgestaltung der Erfindung ist zumindest eine der hydrostatischen Einheiten als Axialkolbenmaschine, insbesondere in Schrägscheibenbauart oder Schrägachsenbauart, mit veränderlichem Förder- und/oder Schluckvolumen ausgeführt. Indem zumindest eine, vorzugsweise beide, hydrostatische Einheiten ein veränderliches Förder- bzw. Schluckvolumen aufweisen, lässt sich bei entsprechender hydraulischer Verbindung der hydrostatischen Einheiten durch Volumenänderung einer oder beider Axialkolbenmaschinen eine stufenlos einstellbare Übersetzung zwischen einer als Pumpe und einer als Motor wirkenden hydrostatischen Einheit erzielen. Es sind verschiedene Bauarten von verstellbaren Axialkolbenmaschinen bekannt und im Rahmen der Erfindung einsetzbar. Beispielsweise ist zumindest eine der hydrostatischen Einheiten in Schrägscheibenbauart mit einer Schrägscheibe ausgeführt, die sich zur Veränderung des Förder- und/oder Schluckvolumens der hydrostatischen Einheit gegenüber deren Gehäuse um eine Achse schwenken lässt. Bei einer hydrostatischen Einheit in Schrägscheibenbauart dreht sich eine Kolbentrommel, d.h. ein mit Zylinderbohrungen versehenes drehbares Kolbengehäuse, gegenüber einem gehäusefesten Steuerboden. Eine Veränderung des Förder- bzw. Schluckvolumens erfolgt durch eine Winkelauslenkung der über dem Gehäuse angebrachten Schrägscheibe oder Schwenkscheibe. Die Kolben sind kraft- und/oder formschlüssig in axialer Richtung mit der Schrägscheibe verbunden und vollziehen somit bei einer Umdrehung der Scheibe eine volle Hubbewegung.

In einer besonders bevorzugten Ausgestaltung der Erfindung weist zumindest eine hydrostatische Einheit ein Schwenkgehäuse auf, welches zur Veränderung des Förder- und/oder Schluckvolumens der hydrostatischen Einheit um eine Achse verschwenkbar ist. Eine Axialkolbenmaschine in Schrägachsbauart umfasst in konstruktiver Hinsicht zweckmäßigerweise jeweils ein mit Zylinderbohrungen versehenes drehbares Kolbengehäuse sowie darin eingesetzte Kolben, die insbesondere über Kugelgelenke mit einer Triebflanschscheibe verbunden sind, wobei eine Drehachse des Kolbengehäuses mit einer Drehachse der Triebflanschscheibe jeweils einen Schwenkwinkel bildet, der sich durch Verschwenken eines das Kolbengehäuse aufnehmenden Schwenkgehäuses um eine Schwenkachse verändern lässt, um das Förder- und/oder Schluckvolumen der hydrostatischen Einheit zu verändern. Weisen beide hydrostatische Einheiten ein eigenes Schwenkgehäuse auf, so sind deren Förder- und/oder Schluckvolumen jeweils einzeln verstellbar. Alternativ kann auch eine Ausführung des hydromechanischen Getriebes vorgesehen sein, bei der die hydrostatischen Einheiten in einem gemeinsamen Schwenkgehäuse, einer sogenannte Doppeljoch-Anordnung, angeordnet sind, so dass die Förder- und/oder Schluckvolumen der hydrostatischen Einheiten gemeinsam verstellbar sind.

Vorzugsweise ist das hydromechanische Getriebe in dem ersten Betriebsmodus durch Schalten einer, insbesondere der ersten, Kupplungsanordnung von einem ersten Übersetzungsbereich in einen zweiten Übersetzungsbereich verbringbar. In dem ersten Betriebsmodus erfolgt eine gemischte Leistungsübertragung, wobei zur Erhöhung der erreichbaren Geschwindigkeit bzw. der Drehzahl der Ausgangswelle eine, insbesondere die erste, Kupplungsanordnung betätigbar ist, wodurch das hydromechanische Getriebe von einem ersten Übersetzungsbereich in einen zweiten Übersetzungsbereich schaltbar ist. Der erste Übersetzungsbereich entspricht dabei einem niedrigeren Geschwindigkeitsbereich als der zweite Übersetzungsbereich. Hierbei kann die Wirkweise der hydrostatischen Einheiten als Pumpe oder Motor umgekehrt werden, so dass beispielsweise in dem ersten Betriebsmodus in dem zweiten Übersetzungsbereich die zweite hydrostatische Einheit als Pumpe und die erste hydrostatische Einheit als Motor wirkt.

Besonders bevorzugt ist eine Bedien- und Steuervorrichtung zur Steuerung des hydromechanischen Getriebes vorgesehen, wobei der erste Betriebsmodus und/oder zweite Betriebsmodus an der Bedien- und Steuervorrichtung auswählbar sind. Der erste und/oder zweite Betriebsmodus ist von einem Bediener in Abhängigkeit der zu verrichtenden Tätigkeiten an der Bedien- und Steuervorrichtung, beispielsweise durch Betätigen eines Schalters oder eine Eingabe über einen Touchscreen-Bildschirm, auswählbar. Dabei kann beispielsweise der erste Betriebsmodus Feldarbeiten und/oder Straßenfahrten zugeordnet sein. Der zweite Betriebsmodus kann beispielsweise einem Rangieren, einem Ankoppeln eines Anbaugerätes und/oder Arbeiten mit einem Frontlader der landwirtschaftlichen Arbeitsmaschine zugeordnet sein, bei denen ein häufiges Wechseln der Fahrtrichtung, insbesondere in einem niedrigen Geschwindigkeitsbereich, erforderlich ist. Eine Aktivierung des gewählten Betriebsmodus und/oder eine entsprechende Schaltung der Kupplungsanordnungen des hydromechanischen Getriebes kann automatisch durch die Bedien- und Steuervorrichtung in Abhängigkeit des Zustandes des hydromechanischen Getriebes und /oder der landwirtschaftlichen Arbeitsmaschine erfolgen, wodurch die Arbeitsbelastung des Bediener gesenkt werden kann. Ebenfalls können über die Bedien- und Steuervorrichtung die Übersetzungsbereiche auswählbar sein, oder automatisch, insbesondere in dem ersten Betriebsmodus, durch die Bedien- und Steuervorrichtung schaltbar sein.

In einer besonders bevorzugten Ausgestaltung der Erfindung ist der zweite Betriebsmodus durch die Bedien- und Steuervorrichtung bei einem Stillstand und/oder in dem ersten Betriebsmodus mit geschaltetem ersten Rückwärtsfahrbereich schaltbar und/oder aktivierbar. Der zweite Betriebsmodus kann durch den Bediener unabhängig von einem Zustand des hydromechanischen Getriebes und/oder der landwirtschaftlichen Arbeitsmaschine ausgewählt werden. Dies kann beispielsweise vor dem Ankoppeln eines Frontladers oder vor Beginn von Arbeiten mit dem Frontlader erfolgen, so dass der Bediener seine Aufmerksamkeit auf die zu verrichtende Tätigkeit lenken kann und ein Schalten und/oder Aktivieren des zweiten Betriebsmodus automatisch erfolgt. So kann in dem ersten Betriebsmodus bei einer Auswahl des zweiten Betriebsmodus eine entsprechende Schaltung der Kupplungsanordnungen, beispielsweise aus dem Vorwärtsfahrbereich in dem zweiten Übersetzungsbereich, und/oder Aktivierung des zweiten Betriebsmodus mit der entsprechenden Steuerung der hydrostatischen Einheiten erst bei dem nächsten Stillstand der Arbeitsmaschine erfolgen. Ebenso kann eine Aktivierung des zweiten Betriebsmodus, insbesondere die Aktivierung der entsprechenden Steuerung der hydrostatischen Einheiten für den Wechsel der Fahrbereiche, in dem ersten Betriebsmodus mit geschaltetem Rückwärtsfahrbereich und erstem Übersetzungsbereich erfolgen, da hierbei bereits eine dem zweiten Betriebsmodus entsprechende Schaltung der ersten und zweiten Kupplungsanordnung vorliegt. Vorteilhaft ist hierbei, dass die Schaltung und/oder Aktivierung des zweiten Betriebsmodus durch die Bedien- und Steuervorrichtung automatisch in Abhängigkeit des Zustandes, insbesondere der Schaltstellungen der ersten und zweiten Kupplungsanordnung, des hydromechanischen Getriebes und/oder der landwirtschaftlichen Arbeitsmaschine, beispielsweise ob sich diese im Stillstand befindet, erfolgt, wodurch der Bediener entlastet wird.

Die Erfindung betrifft ferner eine landwirtschaftliche Arbeitsmaschine mit einem wie oben beschrieben und ausgeführten hydromechanischen Getriebe.

Weiterhin betrifft die Erfindung ein Verfahren zum Betreiben eines hydromechanischen Getriebes mit einem leistungsverzweigten mechanischen Getriebe und einem mit dem mechanischen Getriebe zusammenwirkenden stufenlos verstellbaren hydrostatischen Getriebe, bei dem zur Übertragung von Antriebsleistung eine als Pumpe wirkenden hydrostatischen Einheit mit einer als Motor wirkenden hydrostatischen Einheit hydraulisch verbunden ist, und wobei das hydromechanische Getriebe einen ersten Betriebsmodus aufweist, in welchem durch eine Kupplungsanordnung zwischen einem ersten Vorwärtsfahrbereich und einem ersten Rückwärtsfahrbereich umschaltbar ist, wobei erfindungsgemäß das hydromechanische Getriebe einen zweiten Betriebsmodus aufweist, in welchem das hydromechanische Getriebe schaltfrei, vollhydrostatisch in einem zweiten Vorwärtsfahrbereich und einem zweiten Rückwärtsfahrbereich betrieben wird. Durch Aktivieren des zweiten Betriebsmodus wird das hydrostatische Getriebe derart mit dem leistungsverzweigten mechanischen Getriebe verbunden, dass sowohl in dem Vorwärtsfahrbereich als auch in dem Rückwärtsfahrbereich die Übertragung der Gesamtleistung im Wesentlichen vollständig über das hydrostatische Getriebe erfolgt. Ein Wechseln zwischen den Fahrbereichen, beispielsweise durch Wechseln der Fahrtrichtung von Voraus- zu Rückwärtsfahrt oder andersherum, erfolgt dabei schaltfrei, d.h. ohne die Betätigung einer Kupplung in dem hydromechanischen Getriebe, durch entsprechende Ansteuerung einer oder beider hydrostatischen Einheiten. Durch den schaltfreien Wechsel der Fahrbereiche und die vollhydrostatische Leistungsübertragung kann dabei sowohl in dem Vorwärtsfahrbereich als auch in dem Rückwärtsfahrbereich eine Veränderung der Leistungsanteile vermieden und dadurch eine gleichmäßigere Kraftübertragung ermöglicht werden, wodurch ein präziseres Fahren der landwirtschaftlichen Arbeitsmaschine, beispielsweise beim Rangieren, Arbeiten mit einem Frontlader oder Ankoppeln eines Anbaugerätes, ermöglicht werden kann.

In einer bevorzugten Ausgestaltung ist jeder hydrostatischen Einheit eine Kupplungsanordnung zur schaltbaren Verbindung mit dem mechanischen Getriebe zugeordnet, und wird in dem zweiten Betriebsmodus die als Pumpe wirkende hydrostatische Einheit über eine, insbesondere die erste, Kupplungsanordnung in Antriebsverbindung mit einem festen Übersetzungsverhältnis mit einer Eingangswelle des hydromechanischen Getriebes gekoppelt. Dabei kann beispielsweise der ersten hydrostatischen Einheit die zweite Kupplungsanordnung zugeordnet sein, wodurch die erste hydrostatische Einheit, insbesondere in dem ersten Betriebsmodus, derart mit dem leistungsverzweigten mechanischen Getriebe gekoppelt werden, um dessen Übersetzungsverhältnis zu variieren oder um zwischen den Fahrbereichen durch Schalten der zweiten Kupplungsanordnung umzuschalten. Werden die Kupplungsanordnungen entsprechend dem zweiten Betriebsmodus geschaltet und das hydromechanische Getriebe entsprechend geregelt, erfolgt in dem zweiten Betriebsmodus bei einem von dem Bediener der landwirtschaftlichen Arbeitsmaschine vorgesehenen Wechsels des Fahrbereiches eine Umkehr der Fahrtrichtung schaltfrei, ohne Betätigen einer Kupplungsanordnung. Durch das Koppeln der ersten hydrostatischen Einheit über die zweite Kupplungsanordnung mit einem festen Übersetzungsverhältnis mit der Eingangswelle in dem zweiten Betriebsmodus, kann bei gleichem Druckaufbau in der ersten hydrostatischen Einheit die Leistung des Antriebsmotors erhöht werden, wodurch beispielsweise bei einer mit der Eingangswelle gekoppelten Zapfwelle eine höhere Leistung verfügbar ist.
In einer besonders bevorzugten Ausgestaltung des Verfahrens ist in einem zweiten Betriebsmodus die Zuordnung der beiden hydrostatischen Einheiten als Pumpe und Motor unverändert und wird zum Wechseln zwischen den Fahrbereichen die hydraulische Flussrichtung zwischen den hydrostatischen Einheiten beibehalten oder umgekehrt. Die erste hydrostatische Einheit kann dabei über die zweite Kupplungsanordnung in einem festen Drehzahlverhältnis an die Eingangswelle gekoppelt und proportional zur Drehzahl des Antriebsmotors angetrieben werden, wodurch beispielsweise eine Förderleistung und ein Förderdruck der ersten hydrostatischen Einheit unmittelbar über die Drehzahl der Eingangswelle und des Antriebsmotors gesteuert werden kann. Zum Wechsel zwischen den Fahrbereichen und somit einer Umkehr der Drehrichtung der Ausgangswelle des hydromechanischen Getriebes, kann beispielsweise die hydraulische Flussrichtung der als Pumpe wirkenden, insbesondere ersten, hydrostatischen Einheit umgekehrt werden. Dadurch kann als Motor wirkende, insbesondere zweite, hydrostatische Einheit kostengünstiger als nicht regelbare Einheit ausgebildet sein.

In einer weiter bevorzugten Ausgestaltung des Verfahrens wird an einer vorgesehenen Bedien- und Steuervorrichtung der erste und oder zweite Betriebsmodus ausgewählt. Dabei kann beispielsweise der erste Betriebsmodus Feldarbeiten und/oder Straßenfahrten zugeordnet sein. Der zweite Betriebsmodus kann beispielsweise einem Rangieren, einem Ankoppeln eines Anbaugerätes und/oder Arbeiten mit einem Frontlader der landwirtschaftlichen Arbeitsmaschine zugeordnet sein, bei denen ein häufiges Wechseln der Fahrtrichtung, insbesondere in einem niedrigen Geschwindigkeitsbereich, erforderlich ist. Der Bediener der landwirtschaftlichen Arbeitsmaschine kann an der Bedien- und Steuervorrichtung unabhängig von dem aktuellen Schaltzustand des hydromechanischen Getriebes, insbesondere der Kupplungsanordnungen, und/oder der Regelung der hydrostatischen Einheiten einen Betriebsmodus auswählen, beispielsweise für bevorstehende Arbeiten mit der landwirtschaftlichen Arbeitsmaschine. Eine Aktivierung des gewählten Betriebsmodus und/oder eine entsprechende Schaltung der Kupplungsanordnungen des hydromechanischen Getriebes kann automatisch durch die Bedien- und Steuervorrichtung in Abhängigkeit des Zustandes des hydromechanischen Getriebes und /oder der landwirtschaftlichen Arbeitsmaschine erfolgen, wodurch die Arbeitsbelastung des Bediener gesenkt werden kann. Ebenfalls können über die Bedien- und Steuervorrichtung Übersetzungsbereiche des hydromechanischen Getriebes auswählbar sein, oder automatisch, insbesondere in dem ersten Betriebsmodus, durch die Bedien- und Steuervorrichtung schaltbar sein.

Besonders bevorzugt wird der ausgewählte zweite Betriebsmodus durch die Bedien- und Steuervorrichtung bei einem Stilstand und/oder in dem ersten Betriebsmodus mit geschaltetem ersten Rückwärtsfahrbereich geschaltet und/oder aktiviert wird. Der zweite Betriebsmodus kann durch den Bediener unabhängig von einem Zustand des hydromechanischen Getriebes und/oder der landwirtschaftlichen Arbeitsmaschine ausgewählt werden. Dies kann beispielsweise vor dem Ankoppeln eines Frontladers oder vor Beginn von Arbeiten mit dem Frontlader erfolgen, so dass der Bediener seine Aufmerksamkeit auf die zu verrichtende Tätigkeit lenken kann und ein Schalten und/oder Aktivieren des zweiten Betriebsmodus automatisch erfolgt. Beispielsweise kann der Bediener am Ende einer Straßenfahrt, insbesondere in dem ersten Betriebsmodus, den zweiten Betriebsmodus für bevorstehende Arbeiten mit einem Frontlader der landwirtschaftlichen Arbeitsmaschine auswählen. So kann in dem ersten Betriebsmodus bei einer Auswahl des zweiten Betriebsmodus eine entsprechende Schaltung der Kupplungsanordnungen, beispielsweise aus dem ersten Vorwärtsfahrbereich in dem zweiten Übersetzungsbereich, und/oder Aktivierung des zweiten Betriebsmodus mit der entsprechenden Steuerung der hydrostatischen Einheiten erst bei dem nächsten, der Auswahl nachfolgenden, Stillstand der Arbeitsmaschine erfolgen. Ebenso kann eine Aktivierung des zweiten Betriebsmodus, insbesondere die Aktivierung der entsprechenden Steuerung der hydrostatischen Einheiten für den Wechsel zwischen den zweiten Fahrbereichen, in dem ersten Betriebsmodus mit geschaltetem erstem Rückwärtsfahrbereich und erstem Übersetzungsbereich erfolgen, da hierbei bereits eine dem zweiten Betriebsmodus entsprechende Schaltung der ersten und zweiten Kupplungsanordnung vorliegt. Vorteilhaft ist hierbei, dass die Schaltung und/oder Aktivierung des zweiten Betriebsmodus durch die Bedien- und Steuervorrichtung automatisch in Abhängigkeit des Zustandes des hydromechanischen Getriebes und/oder der landwirtschaftlichen Arbeitsmaschine erfolgt, wodurch der Bediener entlastet wird. Der Zustand des hydromechanischen Getriebes umfasst dabei insbesondere die Schaltstellungen der ersten und zweiten Kupplungsanordnung. Der Zustand der landwirtschaftlichen Arbeitsmaschine kann beispielsweise eine Geschwindigkeit der Arbeitsmaschine umfassen, also ob sich die Arbeitsmaschine im Stillstand befindet.

Die Erfindung wird nachfolgend anhand eines in der Zeichnung dargestellten bevorzugten Ausführungsbeispiels näher erläutert. In der Zeichnung zeigt:
- Fig. 1: eine schematische Seitenansicht einer landwirtschaftlichen Arbeitsmaschine in Form eines Traktors;
- Fig. 2: eine schematische Darstellung eines erfindungsgemäßen hydromechanischen Getriebes;
- Fig. 3: eine schematische Darstellung der in Fig. 2 gezeigten Getriebes in einem ersten Betriebsmodus in einem ersten Übersetzungsbereich;
- Fig. 4: eine schematische Darstellung des Getriebes aus Fig. 2 in einem zweiten Übersetzungsbereich des ersten Betriebsmodus;
- Fig. 5: eine schematische Darstellung des Getriebes aus Fig. 2 in einem zweiten Betriebsmodus; und
- Fig. 6: ein Ablaufdiagramm zur Darstellung der Auswahl eines Betriebsmodus.

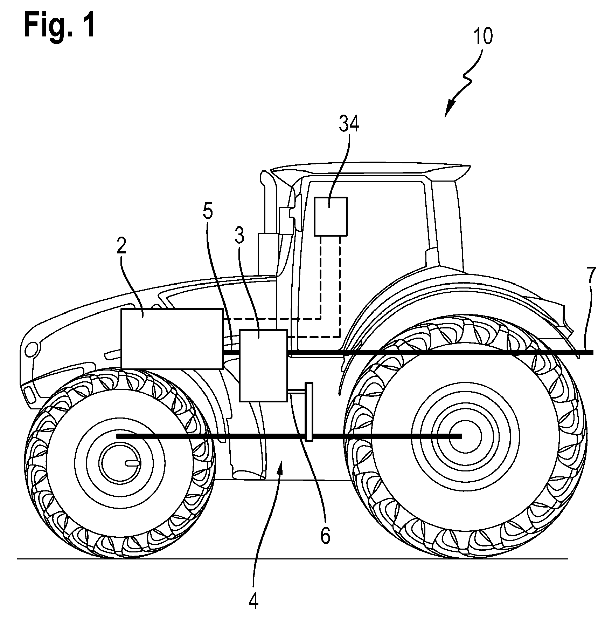

In Figur 1 ist eine schematische Seitenansicht einer landwirtschaftlichen Arbeitsmaschine 1 in Form eines Traktors dargestellt. Eine landwirtschaftliche Arbeitsmaschine 1 im Sinne der Erfindung kann jede in der Landwirtschaft einsetzbare selbstfahrende Maschine, beispielsweise in Form eines Traktors oder eines Teleskopladers sein. Es wird angenommen, dass die technischen Details und Funktionsweise einer landwirtschaftlichen Maschine 1, insbesondere in Form eines Teleskopladers und/oder eines Traktors mit oder ohne Frontlader, dem Fachmann bekannt sind. Die landwirtschaftliche Arbeitsmaschine 1 weist einen Antriebsmotor 2 auf, welcher neben dem Antrieb der Arbeitsmaschine allgemein der Energieversorgung der Arbeitsmaschine und deren Aggregaten, Anbaugeräten und/oder Anhängern dient. Der Antriebsmotor 2 ist über ein hydromechanisches Getriebe 3 mit einem Antriebsstrang 4 (stark vereinfacht dargestellt) der landwirtschaftlichen Arbeitsmaschine 1 verbunden. Das hydromechanische Getriebe 3 weist antriebsmotorseitig eine Eingangswelle 5 auf, welche durch den Antriebsmotor 2 antreibbar ist, und antriebsstrangseitig eine Ausgangswelle 6 sowie eine Zapfwelle 7 auf. Die landwirtschaftliche Arbeitsmaschine 1 weist eine Bedien- und Steuervorrichtung 34 auf, durch welche das hydromechanische Getriebe 3 und/oder der Antriebsmotor 2 steuer- und regelbar sind.

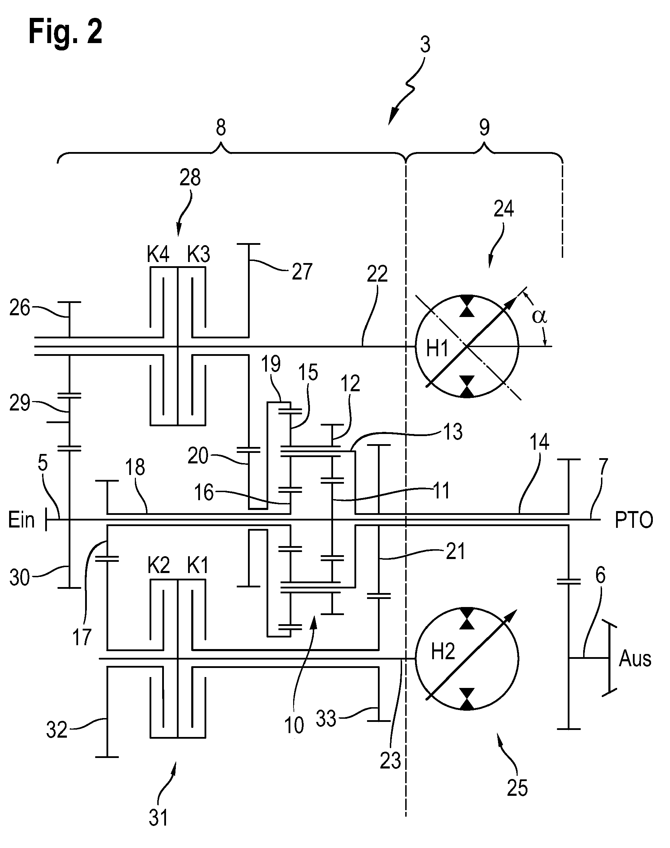

Figur 2 veranschaulicht in einer schematischen Darstellung Anordnung und Zusammenwirken der beweglichen Teile des erfindungsgemäßen hydromechanischen Getriebes 3. Das hydromechanische Getriebe 3 umfasst im Wesentlichen ein leistungsverzweigtes mechanisches Getriebe 8 sowie ein damit zusammenwirkende hydrostatisches Getriebe 9. Insgesamt bilden die beiden miteinander zusammenwirkenden Getriebe 8 und 9 das hydromechanische Getriebe 3. Eine solche hydromechanische Getriebe 3 kommt bevorzugt als Teil eines Fahrantriebsstrangs eines Fahrzeugs, insbesondere eines landwirtschaftlichen Fahrzeugs wie eines Traktors, zum Einsatz und ermöglicht dort eine stufenlos einstellbare Übersetzung zwischen einer (von einem nicht dargestellten Antriebsmotor antreibbaren) Eingangswelle 5 und einer (eine Fahrachse des Fahrzeugs mit Antriebsleistung versorgenden) Ausgangswelle 6 des hydromechanischen Getriebes 3.

Eine mit einem Antriebsmotor (nicht gezeigt) in Antriebsverbindung stehende Eingangswelle 5 geht antriebsmotorseitig in das hydromechanische Getriebe 3 ein. Dabei liegt die Eingangswelle 5 mit einer aus dem hydromechanischen Getriebe 3 ausgehenden Zapfwelle 7 auf einer Achse. Die Eingangswelle 5 und die Zapfwelle 7 sind dabei drehfest miteinander verbunden. Die Drehzahl der Zapfwelle 7 entspricht daher stets der Drehzahl der Eingangswelle 5. Die Eingangswelle 5 ist Teil des leistungsverzweigten mechanischen Getriebes 8.

Das leistungsverzweigte mechanische Getriebe 8 umfasst im dargestellten Ausführungsbeispiel ein zweistufiges Planetengetriebe 10, mit einem drehfest mit der Eingangswelle 5 verbundenen Sonnenrad 11. Das Sonnenrad 11 kämmt mit ersten Planetenrädern 12, deren Planetenträger 13 fest mit einer ausgangsseitigen Welle 14 des Planetengetriebes 17 verbunden ist. Diese ausgangsseitige Welle 14 ist in Form einer koaxial zur Eingangswelle 5 angeordneten Hohlwelle ausgebildet. Der Planetenträger 13 trägt neben den ersten Planetenrädern 12 der ersten Stufe ebenfalls zweite Planetenräder 15 der zweiten Stufe des Planetengetriebes 17. Dabei ist jeweils ein erstes Planetenrad 12 paarweise mit einem zweiten Planetenrad 15 drehfest verbunden. Die zweiten Planetenräder 15 weisen einen größeren Durchmesser auf als die ersten Planetenräder 12. Die zweiten Planetenräder 15 kämmen einerseits mit einem zweiten Sonnenrad 16, welches drehfest mit einem Zahnrad 17 über eine koaxial zur Eingangswelle 5 angeordneten Hohlwelle 18 verbunden ist, und andererseits mit einem Hohlrad 19, welches drehfest mit einem Zahnrad 20 verbunden ist. Auf der ausgangsseitigen Welle 14 ist neben dem Planetenträger 13 drehfest ein Zahnrad 21 angeordnet.

Das leistungsverzweigte Getriebe 8 weist eine erste Zwischenwelle 22 und eine zweite Zwischenwelle 23 auf, welche parallel zueinander und zu der Eingangswelle 5 angeordnet sind. Über die erste und die zweite Zwischenwelle 22, 23 ist das mechanische Getriebe 8 mit dem hydrostatischen Getriebe 9 gekoppelt. Die erste Zwischenwelle 22 ist dabei mit einer ersten hydrostatischen Einheit 24 und die zweite Zwischenwelle 23 einer zweiten hydrostatischen Einheit 25 verbunden.

Die erste Zwischenwelle 22 ist von zwei Hohlwellen mit jeweils einem Zahnrad 26, 27 umgeben und weist eine zweite Kupplungsanordnung 28 zum wahlweise Ankuppeln eines der Zahnräder 26, 27 an die erste Zwischenwelle 22 auf. Die zweite Kupplungsanordnung 28 ist in Form einer Doppelkupplung mit den wahlweise schaltbaren Kupplungen K3 und K4 ausgebildet. Das Zahnrad 27 kämmt mit dem an das zweite Sonnenrad 16 gekoppelten Zahnrad 20. Das Zahnrad 26 ist über ein Umkehrrad 29 mit einem Zahnrad 30 verbunden, welches drehfest an der Eingangswelle 5 angeordnet ist. Die zweite Zwischenwelle 23 weist eine erste Kupplungsanordnung 31 zum wahlweisen Ankoppeln der Zahnräder 32, 33, welche jeweils an einer die zweite Zwischenwelle 23 umgebende Hohlwelle angeordnet sind. Die erste Kupplungsanordnung 31 ist in Form einer Doppelkupplung mit den wahlweise schaltbaren Kupplungen K1 und K2 ausgebildet.

Das mit dem leistungsverzweigten mechanischen Getriebe 8 zusammenwirkende hydrostatische Getriebe 9 weist eine erste hydrostatische Einheit 24 und eine zweite hydrostatische Einheit 25 auf, welche jeweils mit einer Zwischenwelle 22, 23 drehfest verbunden sind. Das hydrostatische Getriebe 3 dient der Übertragung von Antriebsleistung, indem eine als Pumpe wirkende hydrostatische Einheit 24, 25 mit einer als Motor wirkenden hydrostatischen Einheit 25, 24 hydraulisch, über einen nicht dargestellten Hydraulikkreislauf, verbunden ist. Die hydrostatischen Einheiten 24, 25 sind an sich bekannte Axialkolbenmaschinen in Schrägachsbauart, wobei diese ein Schwenkgehäuse (nicht dargestellt) aufweisen können, welches zum Verändern des Förder- und/oder Schluckvolumens einer hydrostatischen Einheit 24, 25 um eine Achse verschwenkbar ausgebildet ist. Durch das hydrostatische Getriebe 9 ist durch eine Änderung des Förder- und/oder Schluckvolumens der hydrostatischen Einheiten 24, 25 ein Drehzahlverhältnis zwischen den hydrostatischen Einheiten 24, 25 und damit der mit diesen verbundenen Zwischenwellen 22, 23 stufenlos verstellbar. Durch den im Wesentlichen gleichen Aufbau der hydrostatischen Einheiten 24, 25 kann das hydrostatische Getriebe 9 auch in umgekehrter Richtung betrieben werden, wobei die Zuordnung der hydrostatischen Einheiten 24, 25 jeweils als Pumpe und Motor umkehrbar ist. Die hydrostatischen Einheiten 24, 25 können einen minimalen Schwenkwinkel α von α = 0° und zu beiden Seiten einen maximalen Schwenkwinkel α von α = 45°aufweisen, wobei bei 45° das förderbare Volumen am größten ist. Die Übersetzung des gesamten hydromechanischen Getriebes 3 hängt dabei von den Schwenkwinkeln α der hydrostatischen Einheiten 24, 25 und von den Stellungen der Kupplungsanordnungen 28, 31 ab. Die Stellung der Kupplungsanordnung 28 bestimmt das Vorzeichen der Übersetzung, d.h. die Drehrichtung der Ausgangswelle 6. Die Kupplung 31 ermöglicht das Umschalten zwischen zwei Übersetzungsbereichen für schnelle und langsame Fahrt bei gleichbleibender Richtung.

Das hydromechanische Getriebe 3 ist mit der Bedien- und Steuervorrichtung 34 verbunden und durch diese steuer- und regelbar. Eine Steuerung und/oder Regelung des hydromechanischen Getriebes 3 umfasst dabei die Steuerung und Regelung, insbesondere der Schwenkwinkel, der hydrostatischen Einheiten 24, 25 und die Schaltung der Kupplungsanordnungen 28, 31 entsprechend dem ausgewählten und aktivierten Betriebsmodus.

Das erfindungsgemäße hydromechanische Getriebe 3 ist in zwei unterschiedliche Betriebsmodi, den ersten Betriebsmodus und den zweiten Betriebsmodus, verbringbar, in welchen eine unterschiedliche Steuerung und Regelung des hydromechanischen Getriebes 3 durch die Bedien- und Steuervorrichtung 34 erfolgt. Die beiden Betriebsmodi können unterschiedlichen Arbeitsbedingungen der landwirtschaftlichen Arbeitsmaschine 1 zugeordnet sein. So kann beispielsweise der erste Betriebsmodus bei Feldarbeiten und/oder Straßenfahrten der landwirtschaftlichen Arbeitsmaschine 3 geschaltet sein. Der zweite Betriebsmodus kann beispielsweise bei Rangierarbeiten, Arbeiten mit einem Frontlader der landwirtschaftlichen Arbeitsmaschine, oder sonstigen Arbeiten geschaltet sein, bei denen bei niedrigen Geschwindigkeiten ein häufiger Fahrtrichtungswechsel sowie präzises Fahren erforderlich sind.

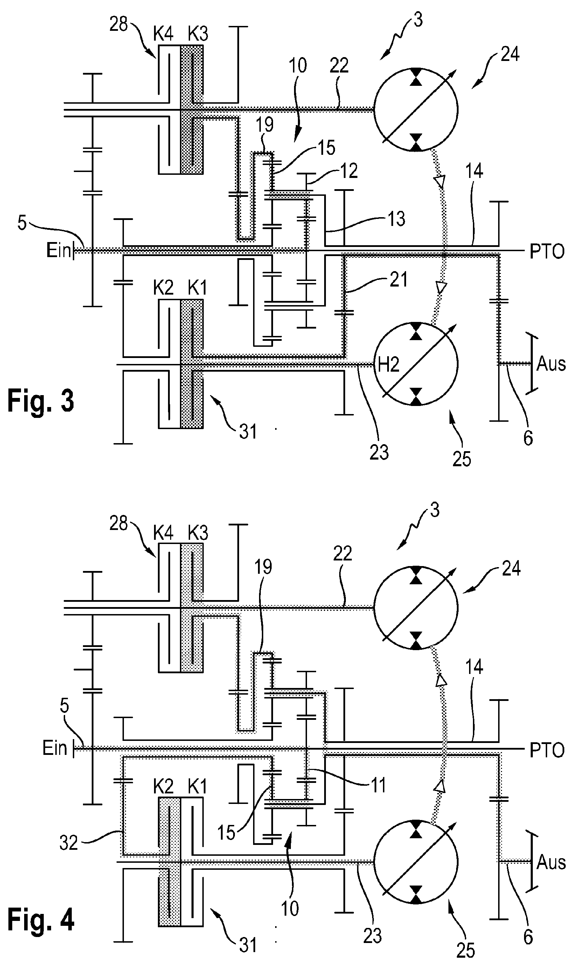

Bei dem in Figur 3 dargestellten hydromechanischen Getriebe 3, welches vom Aufbau dem in Fig. 2 dargestellten Getriebe 3 entspricht, ist bei Auswahl und Aktivierung des ersten Betriebsmodus mit langsamer Fahrt im ersten Vorwärtsfahrbereich die dritte Kupplung K3 der zweiten Kupplungsanordnung 28 geschaltet, wodurch die Eingangswelle 5 über das zweistufige Planetengetriebe 10 mit der ersten Zwischenwelle 22 und damit der ersten hydrostatischen Einheit 24 antriebsverbunden ist. Durch Schließen der dritten Kupplung K3 wird dabei der Vorwärtsfahrbereich geschaltet. Über die hydraulische Verbindung ist zumindest ein Teil der Antriebsleistung von der als Pumpe wirkenden ersten hydrostatischen Einheit 24 auf die als Motor wirkende zweite hydrostatische Einheit 25 übertragbar. Die zweite hydrostatische Einheit 25 ist dabei über die geschaltete erste Kupplung K1 der ersten Kupplungsanordnung 31 über das Zahnrad 21 und die ausgangsseitige Welle 14 mit der Ausgangswelle 6 verbunden. Über die erste Kupplung K1 ist dabei der erste Übersetzungsbereich, insbesondere für langsame Fahrt, schaltbar. Die Leistungsübertragung zwischen der Eingangswelle 5 und der Ausgangswelle 6 erfolgt dabei mit variierenden Anteilen über das leistungsverzweigte mechanische Getriebe 8 und das hydrostatische Getriebe 9, wobei beim Anfahren die Leistungsübertragung im Wesentlichen voll hydrostatisch erfolgt und mit zunehmende Geschwindigkeit der hydrostatische Anteil abnimmt und der mechanische Anteil der Leistungsübertragung zunimmt.

In dem ersten Übersetzungsbereich bei Vorausfahrt im ersten Betriebsmodus treibt die Eingangswelle 5 das zweistufige Planetengetriebe 10 an. Hierbei kommt es zu einem sogenannten Power-Split, bei dem die Antriebsleistung in einen ersten Teil und einen zweiten Teile aufgeteilt wird. Die Größe der jeweiligen Leistungsanteile ist dabei variabel, und insbesondere in Abhängigkeit der Geschwindigkeit der landwirtschaftlichen Arbeitsmaschine veränderbar.

Der erste Teil der Antriebsleistung wird über die mitangetriebenen zweiten Planetenräder 15 auf das Hohlrad 19 und von dort über die erste Zwischenwelle 22 an die hydrostatische Einheit 24 übertragen, welche als Pumpe wirkt und die als Motor wirkende zweite hydrostatische Einheit 25 antreibt. Die zweite hydrostatische Einheit 25 steht somit über die mit dieser verbundene zweite Zwischenwelle 23 und über das Zahnrad 21 mit der ausgangsseitige Welle 14 und der Ausgangswelle 6 in Antriebsverbindung. Der zweite Teil der Antriebsleistung wird über die durch die Eingangswelle 5 angetriebenen ersten Planetenräder 12 der zweistufigen Planetengetriebes 10 auf den Planetenträger 13 übertragen. Der Planetenträger 13 ist mit der ausgangsseitigen Welle 14 verbunden, so dass der erste Teil und der zweite Teil der Antriebsleistung sich an der ausgangsseitigen Welle 14 wieder vereinen und es zu einem sogenannten Power-Joint kommt. Die Antriebsleistung wird dann über die ausgangsseitige Welle 14 auf die Ausgangswelle 6 übertragen. Abhängig von den gewählten Schwenkwinkeln α der hydrostatischen Einheiten 24, 25 lässt sich innerhalb des ersten Übersetzungsbereichs, insbesondere bei einer als konstant angenommen Eingangsdrehzahl der Eingangswelle 5, die Ausgangsdrehzahl der Ausgangswelle 6 stufenlos von null bis zu einer Übergangsdrehzahl verändern. Eine Umkehr der Fahrtrichtung von dem Vorwärtsfahrbereich in den Rückwärtsfahrbereich erfolgt durch Schalten der zweiten Kupplungsanordnung 28, wobei dann die vierte Kupplung K4 geschlossen und die dritte Kupplung K3 geöffnet ist.

Zur weiteren Erhöhung der Geschwindigkeit in dem ersten Betriebsmodus wird zur Schaltung des zweiten Übersetzungsbereiches die erste Kupplungsanordnung 31 derart geschaltet, dass die zweite Kupplung K2 geschlossen und die erste Kupplung K1 geöffnet ist (Fig. 4). Die Schaltung der zweiten Doppelkupplung 28 bleibt dabei unverändert. Die Eingangswelle 5 treibt in dem zweiten Übersetzungsbereich über das erste Sonnenrad 11 die zweiten Planetenräder 15 des zweistufigen Planetengetriebes 10 an.

Nun ist jedoch die erste Kupplungsanordnung 31 derart geschaltet, dass über die geschlossene zweite Kupplung K2 das Zahnrad 32 drehfest mit der zweiten Zwischenwelle 23 verbunden ist. Dadurch wird ein Teil der Antriebsleistung auf die zweite Zwischenwelle 23 übertragen, welche dadurch mit der zweiten hydrostatischen Einheit 25 antriebsverbunden ist, so dass nun die zweite hydrostatische Einheit 25 als Pumpe wirkt, und die dann als Motor wirkende erste hydrostatische Einheit 24 antreibt. Von der ersten hydrostatischen Einheit 24 wird über die erste Zwischenwelle 22 und das Hohlrad 19 und das Planetengetriebe 10 der hydrostatisch übertragende Anteil der Antriebsleistung auf die ausgangsseitige Welle 14 und damit die Ausgangswelle 6 übertragen. Bei dem in dem ersten Betriebsmodus geschalteten zweiten Übersetzungsbereich im Vorwärtsfahrbereich kommt es dabei zu einer Umkehr der hydraulischen Flussrichtung zwischen den hydrostatischen Einheiten 24, 25, wobei es auch zu einer Umkehr der Wirkweise der hydrostatischen Einheiten 24, 25 kommt.

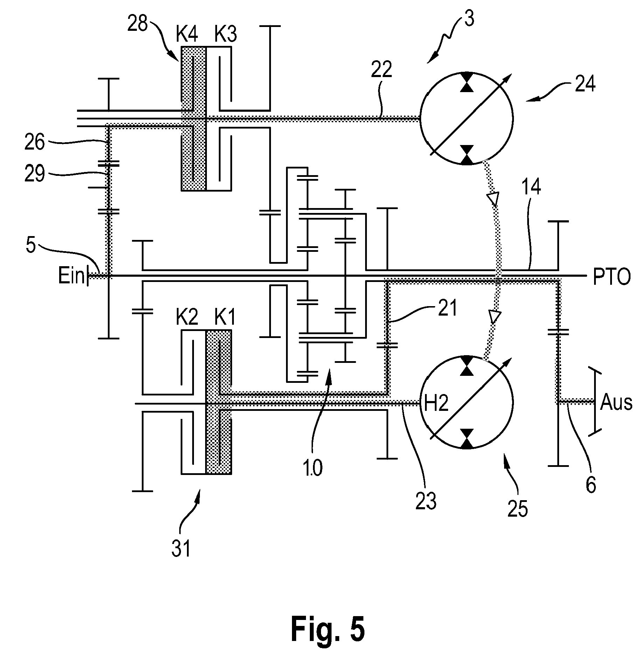

In dem in Figur 5 dargestellten zweiten Betriebsmodus des hydromechanischen Getriebes 3 werden die erste und zweite Kupplungsanordnung 28, 31 derart geschaltet, dass die erste Kupplung K1 und die vierte Kupplung K4 geschlossen und die zweite Kupplung K2 und die dritte Kupplung K3 geöffnet sind. Über die vierte Kupplung K4 ist dabei die Eingangswelle 5 über das Umkehrrad 29 und das Zahnrad 26 drehfest mit der ersten Zwischenwelle 22 verbunden und steht damit in Antriebsverbindung mit der ersten hydrostatischen Einheit 24, welche als Pumpe wirkt. Die erste hydrostatische Einheit 24 ist dabei direkt in einem festen Übersetzungsverhältnis mit der Eingangswelle 5 verbunden, so dass sich eine Drehzahl der ersten hydrostatischen Einheit 24 direkt in Abhängigkeit von der Drehzahl der Eingangswelle 5 und/oder des Antriebsmotors (nicht dargestellt) verändert. Die Übertragung der Antriebsleistung erfolgt in dem zweiten Betriebsmodus im Wesentlichen voll hydrostatisch. Die als Motor wirkende zweite hydrostatische Einheit 25 ist über die erste Kupplung drehfest mit dem Zahnrad 21 an der ausgangsseitigen Welle 14 verbunden, über welche die Antriebsleistung zur Ausgangswelle 6 geleitet wird. Abhängig von den gewählten Schwenkwinkeln α der hydrostatischen Einheiten 24, 25 lässt sich in dem zweiten Betriebsmodus, insbesondere bei einer als konstant angenommen Eingangsdrehzahl der Eingangswelle 5, die Ausgangsdrehzahl der Ausgangswelle 6 stufenlos von null bis zu einer maximalen Drehzahl in beide Drehrichtungen verändern. Dadurch kann in dem zweiten Betriebsmodus ein Wechseln zwischen den Fahrbereichen nur durch eine entsprechende Änderung der Schwenkwinkel α der hydrostatischen Einheiten 24, 25 erfolgen, wodurch ein schaltfreies, präzises Fahren, beispielsweise beim Rangieren oder bei Frontladerarbeiten, ermöglicht wird. Der hydraulische Anteil der Antriebsleistung wird dabei von der ersten hydrostatischen Einheit 24 auf die zweite hydrostatische Einheit 25 übertragen (siehe Pfeilrichtung). Die Fließrichtung des hydraulischen Fluides zur Leistungsübertragung kann dabei konstant in eine Richtung oder umkehrbar sein, abhängig von der Bauart der jeweiligen hydrostatischen Einheiten 24, 25 und/oder deren Regelung, insbesondere der Schwenkwinkel α.

Der erste oder zweite Betriebsmodus kann dabei von einem Bediener der landwirtschaftlichen Arbeitsmaschine 1 an der Bedien- und Steuervorrichtung ausgewählt werden. Unter einer Schaltung des Betriebsmodus ist die dem jeweiligen Betriebsmodus entsprechende Schaltung der Kupplungsanordnungen 28, 31. Eine Aktivierung eines Betriebsmodus umfasst, zusammen mit oder nach einer Schaltung der Kupplungsanordnungen 28, 31, die dem jeweiligen Betriebsmodus entsprechende Steuerung und Regelung der hydrostatischen Einheiten 24, 25. Dadurch können die von dem Bediener vorgesehenen Fahrmanöver in dem entsprechenden Betriebsmodus durchgeführt werden. Beispielsweise kann der zweite Betriebsmodus nach einer Auswahl durch den Bediener an der Bedien- und Steuervorrichtung 34, insbesondere während einer Vorwärtsfahrt in dem ersten Betriebsmodus, beim nächsten Stillstand der Arbeitsmaschine 1 geschaltet und aktiviert werden.

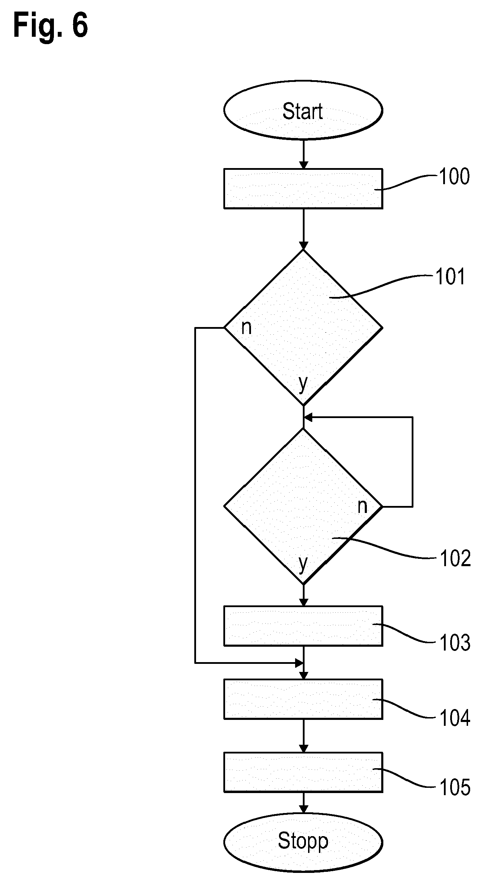

In Figur 6 ist der Ablauf einer Auswahl und Aktivierung eines ersten oder zweiten Betriebsmodus dargestellt. Nach dem Start wird von einem Bediener der landwirtschaftlichen Arbeitsmaschine in einem ersten Schritt 100 an einer Bedien- und Steuervorrichtung (nicht dargestellt) ein Betriebsmodus, beispielsweise der zweite Betriebsmodus, ausgewählt. Die Auswahl eines Betriebsmodus kann dabei unabhängig von dem Betriebszustand der landwirtschaftlichen Arbeitsmaschine und dem hydromechanischen Getriebe erfolgen. Auf die Auswahl folgend kann durch die Bedien- und Steuervorrichtung in einem ersten Entscheidungsschritt 101 überprüft werden, ob zum Aktivieren des ausgewählten, insbesondere zweiten, Betriebsmodus eine Schaltung der Kupplungsanordnungen des hydromechanischen Getriebes erforderlich ist. Falls dies notwendig ist, beispielsweise die Betätigung der zweiten Kupplungsanordnung aus dem ersten Betriebsmodus in dem ersten Vorwärtsfahrbereich, so wird in einem zweiten Entscheidungsschritt 102 geprüft, ob die landwirtschaftliche Arbeitsmaschine im Stillstand oder in einem zum Schalten der Kupplungsanordnungen geeigneten Fahrzustand ist. Ist dies nicht der Fall, wird der zweite Entscheidungsschritt 102 wiederholt abgefragt. Ist die Arbeitsmaschine in einem Stillstand oder einem Zustand, in welchem ein Schalten möglich ist, erfolgt in einem zweiten Schritt 103 das Schalten der Kupplungsanordnungen entsprechend dem gewählten Betriebsmodus. In dem dritten Schritt 104 wird der ausgewählte, insbesondere zweite, Betriebsmodus aktiviert. Die Steuerung und Regelung des hydromechanischen Getriebes entsprechend den Fahreingaben des Bedieners erfolgt in einem vierten Schritt 105, also der Betrieb des hydromechanischen Getriebes in dem ausgewählten und aktivierten Betriebsmodus, wobei eine dem Betriebsmodus entsprechende Ansteuerung des hydromechanischen Getriebes und insbesondere der hydrostatischen Einheiten erfolgt. Dies kann beispielsweise in dem zweiten Betriebsmodus die Steuerung der hydrostatischen Einheiten für den voll hydrostatischen Antrieb in dem zweiten Vorwärtsfahrbereich und dem zweiten Rückwärtsfahrbereich sein.

### Bezugszeichenliste

- 1: Landwirtschaftliche Arbeitsmaschine
- 2: Antriebsmotor
- 3: Hydromechanisches Getriebe
- 4: Antriebsstrang
- 5: Eingangswelle
- 6: Ausgangswelle
- 7: Zapfwelle
- 8: Mechanisches Getriebe
- 9: Hydrostatisches Getriebe
- 10: Zweistufiges Planetengetriebe
- 11: Erstes Sonnenrad
- 12: Erste Planetenräder
- 13: Planetenträger
- 14: Welle
- 15: Zweite Planetenräder
- 16: Zweites Sonnenrad
- 17: Zahnrad
- 18: Hohlwelle
- 19: Hohlrad
- 20: Zahnrad
- 21: Zahnrad
- 22: Erste Zwischenwelle
- 23: Zweite Zwischenwelle
- 24: Erste hydrostatische Einheit
- 25: Zweite hydrostatische Einheit
- 26: Zahnrad
- 27: Zahnrad
- 28: Zweite Kupplungsanordnung
- 29: Umkehrrad
- 30: Zahnrad
- 31: Erste Kupplungsanordnung
- 32: Zahnrad
- 33: Zahnrad
- 34: Bedien- und Steuervorrichtung
- 100: Erster Schritt
- 101: Erster Entscheidungsschritt
- 102: Zweiter Entscheidungsschritt
- 103: Zweiter Schritt
- 104: Dritter Schritt
- 105: Vierter Schritt

- α: Schwenkwinkel

- K1: Erste Kupplung
- K2: Zweite Kupplung
- K3: Dritte Kupplung
- K4: Vierte Kupplung

## Patentansprüche

1. Hydromechanisches Getriebe mit einem leistungsverzweigten mechanischen Getriebe (8) und einem mit dem mechanischen Getriebe (8) zusammenwirkenden stufenlos verstellbaren hydrostatischen Getriebe (9), bei dem zur Übertragung von Antriebsleistung einer als Pumpe wirkenden hydrostatischen Einheit (24, 25) mit einer als Motor wirkenden hydrostatischen Einheit (25, 24) hydraulisch verbunden ist, und wobei das hydromechanische Getriebe (3) einen ersten Betriebsmodus aufweist, in welchem durch eine Kupplungsanordnung (28, 31) zwischen einem ersten Vorwärtsfahrbereich und einem ersten Rückwärtsfahrbereich umschaltbar ist,
**dadurch gekennzeichnet dass**
das hydromechanische Getriebe (3) einen zweiten Betriebsmodus aufweist, in welchem das hydromechanische Getriebe (3) schaltfrei, vollhydrostatisch in einem zweiten Vorwärtsfahrbereich und einem zweiten Rückwärtsfahrbereich betreibbar ist.

2. Hydromechanisches Getriebe Hydromechanisches Getriebe nach Anspruch 1, **dadurch gekennzeichnet, dass** jeder hydrostatischen Einheit (24, 25) eine Kupplungsanordnung (28, 31) zur schaltbaren Verbindung mit dem mechanischen Getriebe (8) zugeordnet ist und dass in dem zweiten Betriebsmodus die als Pumpe wirkende hydrostatische Einheit (24, 25) über eine, insbesondere die zweite, Kupplungsanordnung (28, 31) in Antriebsverbindung mit einem festen Übersetzungsverhältnis mit einer Eingangswelle (5) des hydromechanischen Getriebes (3) koppelbar ist.

3. Hydromechanisches Getriebe nach Anspruch 1 oder 2, **dadurch gekennzeichnet, dass** die hydrostatischen Einheiten (24, 25) derart ausgebildet sind, dass das hydrostatische Getriebe (9) mit umkehrbarer hydraulischer Flussrichtung betreibbar ist, wobei insbesondere in dem zweiten Betriebsmodus die Zuordnung der beiden hydrostatischen Einheiten als Pumpe und Motor unverändert ist.

4. Hydromechanisches Getriebe nach einem der vorherigen Ansprüche, **dadurch gekennzeichnet, dass** zumindest eine der hydrostatischen Einheiten (24, 25) als Axialkolbenmaschine, insbesondere in Schrägscheibenbauart oder Schrägachsenbauart, mit veränderlichem Förder- und/oder Schluckvolumen ausgeführt ist.

5. Hydromechanisches Getriebe nach Anspruch 4, **dadurch gekennzeichnet, dass** zumindest eine hydrostatische Einheit (24, 25) ein Schwenkgehäuse aufweist, welches zur Veränderung des Förder- und/oder Schluckvolumens der hydrostatischen Einheit um eine Achse verschwenkbar ist.

6. Hydromechanisches Getriebe nach einem der vorherigen Ansprüche, **dadurch gekennzeichnet, dass** das hydromechanische Getriebe (3) in dem ersten Betriebsmodus durch Schalten einer, insbesondere der ersten, Kupplungsanordnung (28, 31) von einem ersten Übersetzungsbereich in einen zweiten Übersetzungsbereich verbringbar ist.

7. Hydromechanisches Getriebe nach einem der vorigen Ansprüche, **dadurch gekennzeichnet, dass** eine Bedien- und Steuervorrichtung (34) zur Steuerung des hydromechanischen Getriebes (34) vorgesehen ist, wobei der erste Betriebsmodus und/oder zweite Betriebsmodus an der Bedien- und Steuervorrichtung (34) auswählbar sind.

8. Hydromechanisches Getriebe nach einem der vorherigen Ansprüche, **dadurch gekennzeichnet, dass** der zweite Betriebsmodus durch die Bedien- und Steuervorrichtung (34) bei einem Stillstand und/oder in dem ersten Betriebsmodus mit geschaltetem ersten Rückwärtsfahrbereich schaltbar und/oder aktivierbar ist.

9. Landwirtschaftliche Arbeitsmaschine mit einem hydromechanischen Getriebe nach einem der vorherigen Ansprüche.

10. Verfahren zum Betreiben eines hydromechanischen Getriebes (3), insbesondere nach Anspruch 1, mit einem leistungsverzweigten mechanischen Getriebe (8) und einem mit dem mechanischen Getriebe (8) zusammenwirkenden stufenlos verstellbaren hydrostatischen Getriebe (9), bei dem zur Übertragung von Antriebsleistung eine als Pumpe wirkenden hydrostatischen Einheit (24, 25) mit einer als Motor wirkenden hydrostatischen Einheit (25, 24) hydraulisch verbunden ist, und wobei das hydromechanische Getriebe (3) einen ersten Betriebsmodus aufweist, in welchem durch eine Kupplungsanordnung (28, 31) zwischen einem ersten Vorwärtsfahrbereich und einem ersten Rückwärtsfahrbereich umschaltbar ist,
**dadurch gekennzeichnet, dass**
das hydromechanische Getriebe (3) einen zweiten Betriebsmodus aufweist, in welchem das hydromechanische Getriebe (3) schaltfrei, vollhydrostatisch in einem zweiten Vorwärtsfahrbereich und einem zweiten Rückwärtsfahrbereich betrieben wird.

11. Verfahren nach Anspruch 10, **dadurch gekennzeichnet, dass** jeder hydrostatischen Einheit (24, 25) eine Kupplungsanordnung (28, 31) zur schaltbaren Verbindung mit dem mechanischen Getriebe (8) zugeordnet ist, und dass in dem zweiten Betriebsmodus die als Pumpe wirkende hydrostatische Einheit (24, 25) über eine, insbesondere die zweite, Kupplungsanordnung (28, 31) in Antriebsverbindung mit einem festen Übersetzungsverhältnis mit einer Eingangswelle (5) des hydromechanischen Getriebes (3) gekoppelt wird.

12. Verfahren nach Anspruch 10 oder 11, **dadurch gekennzeichnet, dass** in dem zweiten Betriebsmodus die Zuordnung der beiden hydrostatischen Einheiten (24, 25) als Pumpe und Motor unverändert ist und zum Wechseln zwischen den Fahrbereichen die hydraulische Flussrichtung zwischen den hydrostatischen Einheiten (24, 25) beibehalten oder umgekehrt wird.

13. Verfahren nach einem der Ansprüche 10 bis 12, **dadurch gekennzeichnet, dass** eine Bedien- und Steuervorrichtung (34) vorgesehen ist, an der der erste und oder zweite Betriebsmodus ausgewählt wird.

14. Verfahren nach einem der Ansprüche 10 bis 13, **dadurch gekennzeichnet, dass** der ausgewählte zweite Betriebsmodus durch die Bedien- und Steuervorrichtung (34) bei einem Stilstand und/oder in dem ersten Betriebsmodus mit geschaltetem ersten Rückwärtsfahrbereich geschaltet/aktiviert wird.
